# EUROPEAN PATENT APPLICATION

(11) **EP 4 648 402 A1**
(43) Date of publication of application: **12.11.2025**
(21) Application number: 24174343.4
(22) Date of filing: 06.05.2024
(51) Int. Cl.: H04N 7/15, H04M 3/56

(54) **VIDEO CONFERENCING CONTROLLER, USB-C CABLE, COMPUTER-IMPLEMENTED METHOD, COMPUTER PROGRAM AND NON-VOLATILE DATA CARRIER**

(71) Applicant: Ochno AB, 722 15 Västerås (SE)
(72) Inventor: ERMIS, Olof, 724 61 VÄSTERÅS (SE)
(74) Representative: Brann AB

(57) **Abstract**

A video conferencing controller (100) connects two or more source devices (101) to at least one target device of a video-conference system. The controller (100) has at least two primary ports (p11, p12, p1n) for connection to a respective one of the source devices (101) and at least one secondary port (s11, s12, s1m, s2) for connection to a respective one of the target device(s). A control unit (110) identifies a single one of the source devices (101) as a master source device from which output data may be forwarded to the at least one target device via the video conferencing controller (100). Specifically, in response to a control command (CMD) received via the USB PD protocol, the control unit (110) identifies the master source device and sends a first control signal (M), via the USB PD protocol implemented over the USB-C cable (121), to this device (101). The first control signal (M), in turn, causes an electrically controllable visual indicator (121i) on a USB-C cable (121) between the master source device and the video conferencing controller (100) to attain a predefined state, e.g. showing a green light.

## Description

### TECHNICAL FIELD

The invention relates generally to video conferencing solutions. In particular, the present invention concerns a video conferencing controller according to the preamble of claim 1 and a USB-C (Universal Serial Bus, type C) cable for connecting source devices to the proposed video conferencing controller. The invention also encompasses a computer-implemented method for controlling the video conferencing controller, as well as a corresponding computer program and a storage medium containing such a computer program.

### BACKGROUND

Today's business meetings almost always include some kind of video conferencing system or similar audio/visual support equipment. If there is a single meeting leader controlling the equipment, it is a fairly unproblematic technical situation. However, if two or more meeting participants wish to share the control of the equipment between themselves, the technical situation becomes more challenging.

Different solutions are available, which allow for that each user to select an active port in the video conferencing system, for example by means of an auto-switch when plugging in a cable to the user's laptop.

There are also products on the market, where a user indicates that he/she wishes to gain control of the video conferencing hardware by pushing a button on a cable through which cable the user's device is connected to a KVM (keyboard, video, mouse) switch. The KVM switch, in turn, is connected to the video conferencing hardware. Once set up, such a system may be convenient to handle. Nevertheless, the system requires an external control signal cable to communicate with the push button. As a result, each user must plug in an extra cable between his/her laptop and the KVM switch.

Alternatively, a dedicated software may run on each of the respective users devices, which software controls who's device shall presently be in command. Yet another option is to furnish the KVM switch with a functionality that snoops all the users' keyboards to determine whether a particular user has entered a keystroke combination indicating that he/she wishes to gain control of the video conferencing hardware. In practice, however, none of these solutions constitutes an attractive alternative with respect to user-friendliness.

US 11,671,583 shows a video conferencing system that includes a transmitter and a receiver. When the transmitter is coupled to a port of an information processing device, the transmitter communicates with the information processing device to determine whether the port of the information processing device has video output function. When the above determination result is no, the transmitter emits a wireless signal. The transmitter is coupled to a display device and used to receive the wireless signal and provide a default warning message to the display device.

US 11,039,105 describes a conferencing device that includes a power supply, a processor, a video out module, and a USB hub in communication with the processor and drawing power from the power supply. The conferencing device is configured to provide power from the power supply to an external host device in communication with the USB hub, receive control signals and video data from the external host device, and place video data from the external host device at a video out port of the conferencing device. Embodiments discuss the switching between and/or simultaneous presentation of video data for placement at the video out port as between two or more external host devices connected to the conferencing device based on the control signals sent from the external host devices. The conferencing device may be connected to another conferencing device to create a single logical conferencing device that can handle an expanded number of external host devices.

Thus, technical solutions are known, which allow a set of laptops to be connected to one or more common output devices of a video conferencing system, for instance via USB cables. However, in the existing systems, for different reasons, it is relatively complicated to change the control of the data output from one laptop to another.

### SUMMARY

One object of the present invention is therefore to offer an uncomplicated video conferencing solution that enables switching between different source devices in a convenient and intuitive manner.

According to one aspect of the invention, the object is achieved by a video conferencing controller for connecting at least two source devices to at least one target device of a videoconference system. The video conferencing controller has at least two primary ports, at least one secondary port and a control unit. Each of the at least two primary ports is configured to be communicatively connected to a respective one of the source devices. The at least one secondary port is configured to be communicatively connected to a respective one of the at least one target device. The control unit is configured to identify one and only one of the at least two source devices as a master source device from which output data, e.g. representing images, video and/or audio may be forwarded to the at least one target device via the video conferencing controller. In particular, the control unit is configured to identify the master source device in response to a control command received in the video conferencing controller via a USB (universal serial bus) PD (power delivery) protocol that is implemented over a respective USB-C cable between each of the primary ports and the respective source devices. Preferably, as will be discussed below, the control command originates from a trigger signal produced by a button on the USB-C cable to intended the master source device. The control unit is also configured to send a first control signal via the USB PD protocol over the USB-C cable to the source device, which is identified as the master source device. Here, the first control signal is configured to cause an electrically controllable visual indicator on the USB-C cable to attain a predefined state, for example showing a green light on or proximate the above-mentioned button.

This video conferencing controller is advantageous because it does not require any adaption of the user devices, such as installing software thereon. Moreover, no cabling is needed in addition to the connections required to connect the user devices with the video conferencing controller. Furthermore, it is highly intuitive and straightforward to interact with the system. Namely, the users do not need to learn any commands or keystroke combinations to instruct the system who shall take control of its hardware.

According to one embodiment of this aspect of the invention, the video conferencing controller includes at least two power delivery controllers. Each power delivery controller is configured to receive the control command via the respective USB-C cable that is connected to at least two of the primary ports. In response to receiving the control command, each of the power delivery controllers is further configured to: forward a first message to the control unit, which first message represents the control command; receive a second message from the control unit, and based on the second message, send the first control signal via the USB PD protocol implemented over the USB-C cable to the master source device. Thus, the power delivery controllers may efficiently convey information to all the user devices about which one of them is presently the master.

According to another embodiment of this aspect of the invention, each of the power delivery controllers is further configured to receive a third message from the control unit. Based on the third message each of the power delivery controllers is further configured to send a second control signal via the USB PD protocol implemented over the USB-C cable to each of the source devices which not is identified as the master source device. The second control signal indicates that each of the source devices to which the second control signal is sent is unable to forward any output data to the at least one target device. In other words, it may also be signaled to all concerned parties who is *not* in control of the videoconferencing hardware.

According to yet another embodiment of this aspect of the invention, at least one of the at least one secondary port is configured to be communicatively connected, via an interlinking USB-C cable, to a primary port of another instance of the video conferencing controller. Here, the control unit is further configured to forward, via the interlinking USB-C cable, output data from each of the source devices connected to the video conferencing controller to said other instance of the video conferencing controller. The control unit is configured to identify a source device that is communicatively connected to said other instance of the video conferencing controller as the master source device in response to the control command received in said other instance of the video conferencing controller via the USB PD protocol implemented over the interlinking USB-C cable. Additionally, the control unit is configured to send the first control signal via the USB PD protocol implemented over the interlinking USB-C cable to said other instance video conferencing controller for forwarding output data there from via a primary port therein and a USB-C cable to the source device, which is identified as the master source device. Thus, the electrically controllable visual indicator on said USB-C cable is caused to attain the predefined state which indicates that the source device connected via this cable is the master. This serial connection of video conferencing controllers allows for a very convenient expansion of the number of connected source devices if the capacity of a single unit is insufficient.

According to a further embodiment of this aspect of the invention, the control unit is configured to send the second control signal via the USB PD protocol implemented over the interlinking USB-C cable and a respective USB-C cable to each of the source devices being communicatively connected to said other instance of the videoconferencing controller which is not identified as the master source device. Consequently, any non-master source devices may gain information about the fact that they cannot control the videoconferencing hardware also if two or more video conferencing controllers are connected in series with one another.

According to another aspect of the invention, the above-mentioned object is achieved by a USB-C cable configured to connect a source device communicatively to the above-proposed video conferencing controller. The USB-C cable includes an electrically controllable visual indicator, e.g. in the form of a light source or a mechanical switch that is configured to attain the predefined state in response to the first control signal. Thus, it may readily and unambiguously be illustrated which source device that is master and which is not.

According to one embodiment of this aspect of the invention, the electrically controllable visual indicator comprises a light source, which is configured to emit light of at least two different colors, where a first color, e.g. green, represents the predefined state, i.e. shows that the source device connected to the USB-C cable in question is master, and a second color, e.g. red, indicates that the source device connected to the USB-C cable in question is a non-master source device. Consequently, the users may be informed about the respective statuses of all source devices in a reliable and simple manner.

Preferably, the light source is a red-green-blue, RGB, light emitting diode, LED. Namely, this allows for straightforward control and enables indication of many colors in addition to the above-mentioned two.

According to another embodiment of this aspect of the invention, the electrically controllable visual indicator, e.g. the light source, is co-located with a button configured to produce a trigger signal for generating the control command in response to which the master source device is identified. Thereby, a user may indicate his/her intention to take control of the videoconferencing hardware by pushing the button, and then obtain immediate feedback of gained control via the visual indicator. Of course, this provides for a very intuitive interaction with the system.

For simplicity, it is advantageous if the electrically controllable visual indicator is integrated into a plug connector of the USB-C cable. However, naturally, it is equally well conceivable that said indicator constitutes a separate unit on the USB-C cable.

According to yet another aspect of the invention, the above-mentioned object is achieved by a computer-implemented method for controlling a flow of output data from a particular one of at least two source devices to at least one target device. The method is performed in processing unit of a video conferencing controller, and the method is configured to identify one and only one of the at least two source devices as a master source device from which output data may be forwarded to the at least one target device via the video conferencing controller. The method involves identifying the master source device in response to a control command received in the video conferencing controller via a USB PD protocol implemented over a respective USB-C cable between each of the primary ports and the respective one of the source devices. The method also involves sending a first control signal via the USB PD protocol implemented over the USB-C cable to the source device, which is identified as the master source device. Here, the first control signal is configured to cause an electrically controllable visual indicator on said USB-C cable to attain a predefined state illustrating that the source device connected to this cable is master. The advantages of this method are apparent from the discussion above with reference to the proposed video conferencing controller.

According to a further aspect of the invention, the object is achieved by a computer program loadable into a non-volatile data carrier communicatively connected to a processing unit, where the computer program includes software for executing the above method when being run on the respective processing units.

According to another aspect of the invention, the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows an overview of a system including one instance of a videoconferencing controller according to the invention;
- Figure 2: shows a block diagram of a videoconferencing controller according to one embodiment of the invention;
- Figure 3: shows an overview of a system including two instances of the videoconferencing controllers according to the invention;
- Figures 4a - 4c: illustrate examples of USB-C cables according to embodiments of the invention; and
- Figure 5: illustrates, by means of a flow diagram, the general method according to the invention for controlling a flow of output data from a particular one of at least two source devices to at least one target device via a video conferencing controller.

### DETAILED DESCRIPTION

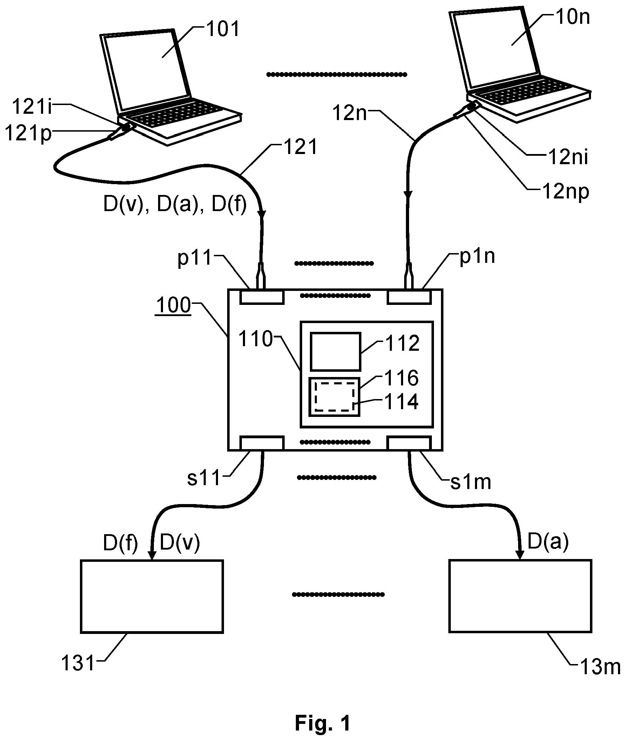

Figure 1 shows an overview of a system that includes a videoconferencing controller 100 according to the invention.

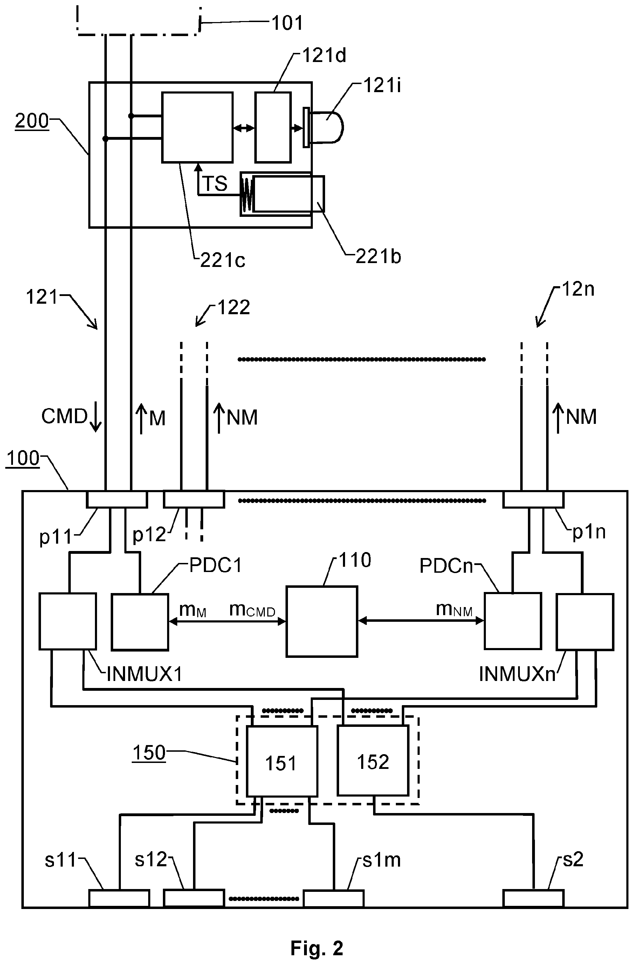

The video conferencing controller 100 is arranged to connect at least two source devices, for example in the form of laptops, tablets and/or smartphones, which here are exemplified as 101 and 10n respectively, to at least one target device 131 and 13m respectively of a videoconference system. For example a first one 131 of the target devices may be a video display, such as a monitor or a TV screen, which is configured to show visual data, e.g. in the form of a video file D(v) and/or a text file D(f). A second one 13m of the target devices may be a loudspeaker that is adapted to represent the acoustic information of an audio file D(a). As will be discussed below with reference to Figure 2, other types of target devices, for instance cameras and/or various kinds of pointer devices may also be connected to the video conferencing controller 100.

The video conferencing controller 100 contains at least two primary ports, here represented by p11 and p1n, at least one secondary port, here shown as s11 and s1m, and a control unit 110. Each of the primary ports p11 and pin respectively is configured to be communicatively connected to a respective one of the at least two source devices 101 and 10n. The primary ports p11 and pin are of USB-C type, so that they may receive a respective USB-C cable connector 121p and 12np. Each of the secondary ports s11 and s1m is configured to be communicatively connected to a respective one of the target device 131 and 13n.

The secondary ports s11 and s1m may be of different formats depending on the type of equipment intended to be connected to each port. For example a secondary port s11 that is adapted to be connected to a target device 131 in the form of a video display may be of HDMI (High-Definition Multimedia Interface) type, whereas a secondary port s1m that is adapted to be connected to a target device 13m in the form of a speaker may of USB-A type.

The control unit 110 is configured to identify one and only one of the at least two source devices 101 and 10n as a master source device from which output data D(v), D(a) and/or D(f)) may be forwarded to the target devices 131 and 13m via the video conferencing controller 100.

Referring now to Figure 2 showing a block diagram of a videoconferencing controller 100 according to one embodiment of the invention, the control unit 110 is specifically configured to identify the master source device in response to a control command CMD received in the video conferencing controller 100 via a USB PD protocol implemented over a respective USB-C cable, say 121, between each of the at least two primary ports, say p11, and the respective one of the source devices, say 101.

According to one embodiment of the invention, the USB-C cable 121 contains a button 221b, which, when being pushed by a user, is configured to produce a trigger signal TS for generating the control command CMD. For example, a housing 200 on the USB-C cable 121 may include the button 221b and an EMCA (Electronically Marked Cable Assembly) circuit 221c, which is adapted to generate the control command CMD based on the trigger signal TS and then forward the control command CMD to the videoconferencing controller 100 over the USB-C cable 121 while employing the USB PD protocol implemented thereon.

According to the invention, in further response to receiving the control command CMD, the control unit 110 is configured to send a first control signal M via the USB PD protocol implemented over the USB-C cable 121 to the source device 101, which is identified as the master source device. The first control signal M is configured to cause an electrically controllable visual indicator 121i on the USB-C cable 121 to attain a predefined state. For example, this may involve activating a light source.

According to one embodiment of the invention, the USB-C cable 121 contains an electrically controllable visual indicator 121i, e.g. a light emitting diode, LED, configured to attain the predefined state, say an active state in which it emits light, in response to the first control signal M. The electrically controllable visual indicator 121i may be controlled via a driver circuit 121d, which, in turn, is controllable by the EMCA circuit 221c in the housing 200 on the USB-C cable 121.

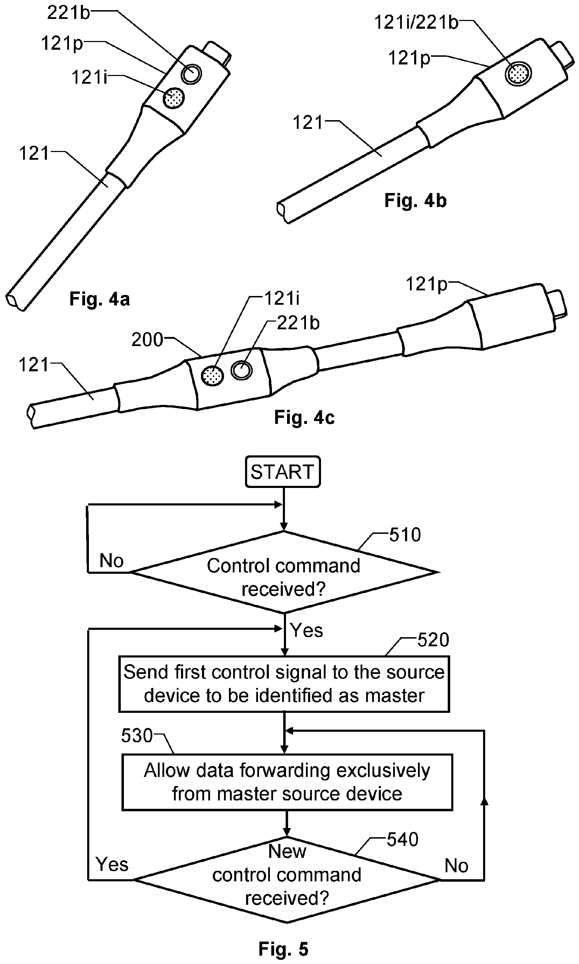

According to one embodiment of the invention, the electrically controllable visual indicator 121i is co-located with the button 221b, for example in the housing 200, as shown in Figure 2. Other embodiments of how the electrically controllable visual indicator 121i and the button 221b may be arranged according to embodiments of the invention will be discussed below with reference to Figures 4a, 4b and 4c.

According to one embodiment of the invention, the electrically controllable visual indicator 121i comprises a light source configured to emit light of at least two different colors, where light of a first color represents the predefined state and indicates that the source device 101 connected to the USB-C cable 121 is identified as the master source device, and light of a second color indicates that the source device 10n connected to the USB-C cable 12n is identified as a non-master source device NM. The light source may be a red-green-blue, RGB, LED, which is capable of emitting light in a wide range of different colors.

According to one embodiment of the invention, the video conferencing controller 100 includes one power delivery controller for each of the primary ports p11, p12 and p1n, i.e. at least two. Figure 2 illustrates two such power delivery controllers in the form of PDC1 and PDCn respectively. Each of the power delivery controllers PDC1 and PDCn is configured to receive the control command CMD via the respective USB-C cable 121 and 12n connected to the respective primary port p11 and p1n. In response to receiving the control command CMD, each of the power delivery controllers PDC1 and PDCn is configured to forward a first message m_{CMD} to the control unit 110. The first message m_{CMD} represents the control command CMD. Thus, the first message m_{CMD} may be either a copy of the control command CMD, or an equivalence thereto expressed on a format that is adapted for the internal communication in the video conferencing controller 100.

Additionally, each of the power delivery controllers PDC1 and PDCn is configured to receive a second message m_{M} from the control unit 110, and based on the second message m_{M} send the first control signal M via the USB PD protocol implemented over the USB-C cable 121 to the source device 101, which is identified as the master source device.

According to one embodiment of the invention, each of the power delivery controllers PDC1 and PDCn is configured to receive a third message m_{NM} from the control unit 110. Further, based on the third message m_{NM}, each of the power delivery controllers PDC1 and PDCn is configured to send a second control signal NM via the USB PD protocol implemented over the USB-C cable, here 122 and 12n, to each of the source devices, e.g. 10n in Figure 1, which is *not* identified as the master source device. The second control signal NM indicates that each of the source devices, such as 10n, to which the second control signal NM is sent is *unable* to forward any output data D(v), D(a), D(f) to the target devices 131 and 13m.

According to embodiments of the invention, the video conferencing controller 100 includes a respective input multiplexer for each of the primary ports p11, p12 and p1n, exemplified as INMUX1 and INMUXn in Figure 2, which input multiplexer is configured to forward the output data D(v), D(a), D(f) to a switch 150. The switch 150, in turn, is adapted to feed the output data D(v), D(a), D(f) to the relevant secondary port s11, s12, s1m and/or s2 depending on the type of output data. The switch 150 may contain a USB hub 151 and an output multiplexer 152, where the USB hub 151 is configured to forward output data to various USB devices, such as pointer/cursor devices and cameras, and the output multiplexer 152 is configured to forward output data to presentation devices in the form of for example displays and speakers via one or more ports s2, e.g. of HDMI, Display-Port, VGA, DVI or other types of monitor formats.

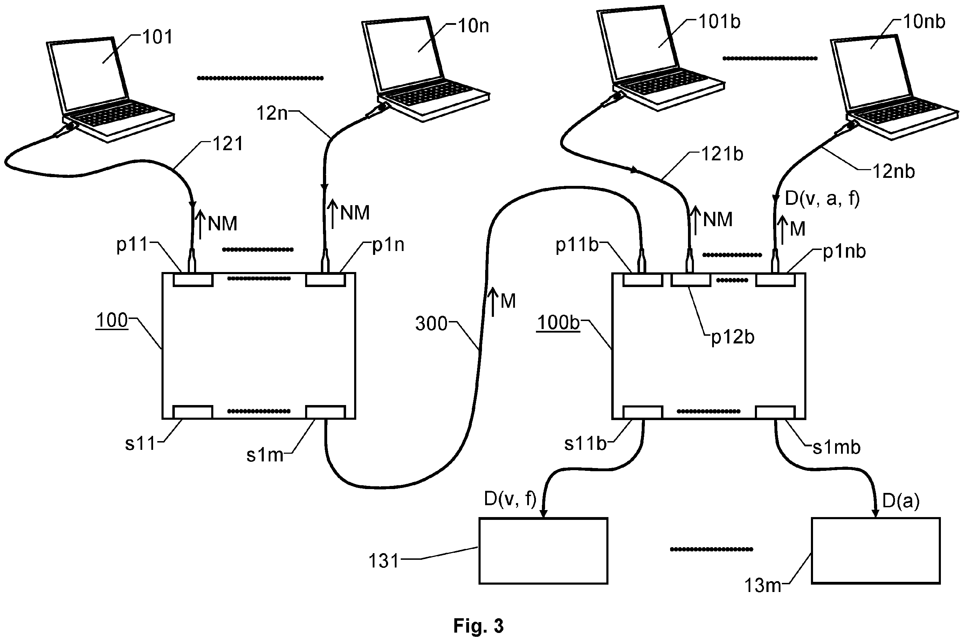

Figure 3 shows an overview of a system that includes first and second instances 100 and 100b respectively of the videoconferencing controller according to the invention.

Here, at least one secondary port s1m of the first instance of the video conferencing controller 100 is configured to be communicatively connected, via an interlinking USB-C cable 300, to a primary port p11b of the second instance of the video conferencing controller 100b, such that the first and second instances 100 and 100b are connected in series with one another.

The control unit 110 in the first instance 100 of the videoconferencing controller is configured to forward, via the interlinking USB-C cable 300, output data D(v), D(a), D(f) from each of the source devices 101 and 10n that are communicatively connected to the video conferencing controller 100 to the second instance 100b of the video conferencing controller.

The control unit 110 in the first instance 100 of the videoconferencing controller is also configured to identify a source device 10nb that is communicatively connected to the second instance 100b of the video conferencing controller as the master source device in response to the control command CMD received in the second instance 100b of the video conferencing controller 100 via the USB PD protocol implemented over the interlinking USB-C cable 300.

Additionally, the control unit 110 in the first instance 100 of the videoconferencing controller is configured to send the first control signal M via the USB PD protocol implemented over the interlinking USB-C cable 300 to the second instance 100b of the video conferencing controller for forwarding output data D(v), D(a), D(f) there from via a primary port p1nb therein and a USB-C cable 12nb to the source device 10nb, which is identified as the master source device and thus cause the electrically controllable visual indicator on the USB-C cable 12nb to attain the predefined state.

According to one embodiment of the invention, the control unit 110 in the first instance 100 of the videoconferencing controller is configured to send the second control signal NM via the USB PD protocol implemented over the interlinking USB-C cable 300 and a respective USB-C cable 121b to each of the source devices 101b being communicatively connected to the second instance 100b of the videoconferencing controller 300 which is not identified as the master source device.

Preferably, of course, the first and second instances 100 and 100b of the videoconferencing controller are identical, such that their relative positions in the above example are interchangeable.

Figures 4a to 4c illustrate examples of USB-C cables according to embodiments of the invention.

Figure 4a shows a USB-C cable 121 with a connector plug 121p with an integrated electrically controllable visual indicator 121i and a button 221b configured to produce the trigger signal TS for generating the control command CMD. Here, the electrically controllable visual indicator 121i and the button 221b are co-located into the connector plug 121p. However, the electrically controllable visual indicator 121i and the button 221b constitute separate physical entities.

In Figure 4b, the electrically controllable visual indicator 121i and the button 221b are both embodied in a common button and light unit, which is integrated into the connector plug 121p on the USB-C cable 121.

Figure 4c shows another example, where the electrically controllable visual indicator 121i and the button 221 are co-located, however constitute separate physical entities. Here, instead of being integrated in the connector plug 121p, the electrically controllable visual indicator 121i and the button 221 are placed in a housing 200 on the USB-C cable 121, which housing is physically separated from the connector plug 121p, the electrically controllable visual indicator 121i and the button.

As readily understood by the skilled person, the electrically controllable visual indicator 121i and the button 221 may be arranged on the USB-C cable 121 in various combinations in addition to the examples shown in Figure 4a to 4c.

Returning now to Figure 1, it is generally advantageous if the video conferencing controller 100 is configured to effect the above-described procedure in an automatic manner by executing a computer program. Therefore, the control unit 110 may include at least one processing unit 112 and a memory unit 116, i.e. non-volatile data carrier, storing a computer program 114, which, in turn, contains software for making the at least one processing unit 112 execute the actions mentioned in this disclosure when the computer program 114 is run on the at least processing unit 112.

In order to sum up, and with reference to the flow diagram in Figure 5, we will now describe a general method according to the invention for controlling the video conferencing controller 100, which method is implemented in the at least one processing unit 112 of the control unit 110.

A first step 510, checks whether a control command has been received, which control command designates a request from a particular from a particular one of at least two source devices to feed a flow of output data to at least one target device of the videoconferencing system. If the control command has been received, a step 520 follows; and otherwise, the procedure loops back and stays in step 510.

In step 520, a first control signal is sent to the source device from which the control command was received. The first control signal is configured to cause an electrically controllable visual indicator on the USB-C cable to attain a predefined state, for example a state in which a light source is lit, which indicates that the source device connected via this cable is a master source device. Both the control command and the first control signal are sent over a USB PD protocol implemented over a USB-C cable.

In a subsequent step 530, data are allowed to be forwarded exclusively from the source device from which the control command was received, i.e. from the master source device.

A following step 540, checks if a new control command has been received from a different source device. If so, the procedure loops back to step 520; and otherwise, the procedure loops back to step 530 so that data may be continued to be forwarded from the current master source device to the at least one target device.

The process steps described with reference to Figure 5 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/ Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A video conferencing controller (100) for connecting at least two source devices (101, 10n) to at least one target device (131, 13m) of a videoconference system, the video conferencing controller (100) comprising:
at least two primary ports (p11, p12, p1n) which each is configured to be communicatively connected to a respective one of the at least two source devices (101, 10n),
at least one secondary port (s11, s12, s1m, s2) configured to be communicatively connected to a respective one of the at least one target device (131, 13n), and
a control unit (110) configured to identify one and only one of the at least two source devices (101, 10n) as a master source device from which output data (D(v), D(a), D(f)) may be forwarded to the at least one target device (131, 13m) via the video conferencing controller (100),
**characterized in that** the control unit (110) is configured to:
identify the master source device in response to a control command (CMD) received in the video conferencing controller (100) via a universal serial bus power-delivery, USB PD, protocol implemented over a respective USB-C cable (121, 122, 12n) between each of the at least two primary ports (p11, p12, p1n) and the respective one of the at least two source devices (101, 10n), and
send a first control signal (M) via the USB PD protocol implemented over the USB-C cable (121) to the source device (101) which is identified as the master source device, which first control signal (M) is configured to cause an electrically controllable visual indicator (121i, 12ni) on said USB-C cable (121) to attain a predefined state.

2. The video conferencing controller (100) according to claim 1, comprising at least two power delivery controllers (PDC1, PDCn) which each is configured to:
receive the control command (CMD) via the respective USB-C cable (121, 122, 12n) connected to at least two of the primary ports (p11, p12, p1n), and in response thereto:
forward a first message (m_{CMD}) to the control unit (110), which first message (m_{CMD}) represents the control command (CMD),
receive a second message (m_{M}) from the control unit (110), and based on the second message (m_{M})
send the first control signal (M) via the USB PD protocol implemented over the USB-C cable (121) to the source device (101) which is identified as the master source device.

3. The video conferencing controller (100) according to claim 2, wherein each of the at least two power delivery controllers (PDC1, PDCn) is further configured to:
receive a third message (m_{NM}) from the control unit (110), and based on the third message (m_{NM})
send a second control signal (NM) via the USB PD protocol implemented over the USB-C cable (122, 12n) to each of the source devices (10n) which not is identified as the master source device, which second control signal (NM) indicates that each of said source devices (10n) to which the second control signal (NM) is sent is unable to forward any output data (D(v), D(a), D(f)) to the at least one target device (131, 13m).

4. The video conferencing controller (100) according to any one of the preceding claims, wherein at least one of the at least one secondary port (s1m) is configured to be communicatively connected, via an interlinking USB-C cable (300), to a primary port (p11b) of another instance of the video conferencing controller (100b), and the control unit (110) is further configured to:
forward, via the interlinking USB-C cable (300), output data (D(v), D(a), D(f)) from each of the at least two source devices (101, 10n) being communicatively connected to the video conferencing controller (100) to said other instance of the video conferencing controller (100b),
identify a source device (10nb) that is communicatively connected to said other instance of the video conferencing controller (100b) as the master source device in response to the control command (CMD) received in said other instance of the video conferencing controller (100) via the USB PD protocol implemented over the interlinking USB-C cable (300), and
send the first control signal (M) via the USB PD protocol implemented over the interlinking USB-C cable (300) to said other instance video conferencing controller (100b) for forwarding output data (D(v), D(a), D(f)) there from via a primary port (p1nb) therein and a USB-C cable (12nb) to the source device (10nb) which is identified as the master source device and thus cause the electrically controllable visual indicator (121i, 12ni) on said USB-C cable (12nb) to attain the predefined state.

5. The video conferencing controller (100) according to claims 3 and 4, wherein the control unit (110) is further configured to send the second control signal (NM) via the USB PD protocol implemented over the interlinking USB-C cable (300) and a respective USB-C cable (121b) to each of the source devices (101b) being communicatively connected to said other instance of the videoconferencing controller (300) which is not identified as the master source device.

6. A USB-C cable (121, 122, 12n, 121b, 12nb) configured to connect a source device (101, 10n) communicatively to the video conferencing controller (100) according to any one of the preceding claims, **characterized in that** the USB-C cable comprises an electrically controllable visual indicator (121i) configured to attain the predefined state in response to the first control signal (M).

7. The USB-C cable (121, 122, 12n, 121b, 12nb) according to claim 6, wherein the electrically controllable visual indicator comprises a light source configured to emit light of at least two different colors of which light of a first color represents the predefined state and indicates that the source device (101) connected to the USB-C cable (121) is identified as the master source device and of which light of a second color indicates that the source device (10n) connected to the USB-C cable (12n) is identified as a non-master source device (NM).

8. The USB-C cable (121, 122, 12n, 121b, 12nb) according to claim 7, wherein the light source is a red-green-blue, RGB, light emitting diode, LED.

9. The USB-C cable (121, 122, 12n, 121b, 12nb) according to any one of claims 6 to 8, wherein the electrically controllable visual indicator (121i) is co-located (200, 121p) with a button (221b) configured to produce a trigger signal (TS) for generating the control command (CMD) in response to which the master source device is identified.

10. The USB-C cable (121, 122, 12n, 121b, 12nb) according to any one of claims 6 to 9, wherein the electrically controllable visual indicator (121i) is integrated into a plug connector (121p) of the USB-C cable (121, 122, 12n, 121b, 12nb).

11. A computer-implemented method for controlling a flow of output data (D(v), D(a), D(f)) from a particular one of at least two source devices (101, 10n) to at least one target device (131, 13n), which method is performed in processing unit (112) of a video conferencing controller (100) configured to identify one and only one of the at least two source devices (101, 10n) as a master source device from which output data (D(v), D(a), D(f)) may be forwarded to the at least one target device (131, 13m) via the video conferencing controller (100),
the method **characterized by:**
identifying the master source device in response to a control command (CMD) received in the video conferencing controller (100) via a universal serial bus power-delivery, USB PD, protocol implemented over a respective USB-C cable (121, 122, 12n) between each of the at least two primary ports (p11, p12, p1n) and the respective one of the at least two source devices (101, 10n), and
sending a first control signal (M) via the USB PD protocol implemented over the USB-C cable (121) to the source device (101) which is identified as the master source device, which first control signal (M) is configured to cause an electrically controllable visual indicator (121i, 12ni) on said USB-C cable (121) to attain a predefined state.

12. A computer program (114) loadable into a non-volatile data carrier (116) communicatively connected to a processing unit (112), the computer program (114) comprising software for executing the method according to claim 11 when the computer program (114) is run on the processing unit (112).

13. A non-volatile data carrier (116) containing the computer program (114) of the claim 12.
